**Europäisches Patentamt**

**European Patent Office**

**Office européen des brevets**

(19)

(11) Veröffentlichungsnummer: **0 384 894**

**A1**

(12) # EUROPÄISCHE PATENTANMELDUNG

(21) Anmeldenummer: **90810107.4**

(22) Anmeldetag: **14.02.90**

(51) Int. Cl.5: **H04M 1/03, G06K 19/04**

(30) Priorität: **24.02.89 CH 676/89**

(43) Veröffentlichungstag der Anmeldung:
**29.08.90 Patentblatt 90/35**

(84) Benannte Vertragsstaaten:
**AT BE CH DE DK ES FR GB IT LI NL SE**

(71) Anmelder: **ASCOM AUTOPHON AG**
**Ziegelmattstrasse 1-15**
**CH-4503 Solothurn(CH)**

(72) Erfinder: **Stettler, Kurt**
**Untere Emmengasse 14a**
**CH-4552 Derendingen(CH)**
Erfinder: **Iseli, Martin**
**Vereinsweg 18**
**Ch-3012 Bern(CH)**
Erfinder: **Emmert, Christine**
**Obere Sternengasse 23**
**CH-4500 Solothurn(CH)**
Erfinder: **Reber, Hansrudolf**
**Balmfluhstrasse 322**
**CH-4524 Günsberg(CH)**

(74) Vertreter: **Tschudi, Lorenz et al**
**Bovard AG Patentanwälte VSP**
**Optingenstrasse 16**
**CH-3000 Bern 25(CH)**

(54) **Teilnehmer-Telefonanordnung.**

(57) Teilnehmer-Telefonanordnung mit mindestens einer Telefonstation (11) und einem mobilen Datenträger (1) zum zeitweiligen Anbringen an der Telefonstation (11) derart, dass beidseitig vorhandene Schnittstellen übertragungsfähig werden, wobei der Datenträger (1) eine U-förmige Klammer aufweist, an deren Innenseite die Datenträgerschnittstelle angebracht ist, und die Telefonstation (11) einen Stegteil aufweist, zu welchem die Stationsschnittstelle benachbart angeordnet ist und der zum Umfassen durch die Klammer bestimmt ist. Ausserdem gehört zu der Anordnung ein kartenförmiges, zum Anstecken einer Klammer (1) geeignetes und in numerierte Zeilen (46) eingeteiltes beschriftbares Teilnehmerverzeichnis (41), welches Festhaltemittel (42,43) aufweist, die eine leicht lösbare Befestigung desselben an einer Schnur (36) der vorzugsweise als mobiler Handapparat ausgebildeten Telefonstation (11) gestatten.

Fig. 3

## Teilnehmer-Telefonanordnung

Die Erfindung betrifft eine Teilnehmer-Telefonanordnung nach dem Oberbegriff des Patentanspruchs 1. Bei bekannten solchen Anordnungen besitzt die Telefonstation einen Schlitz, in welchen der mobile Datenträger, eine flache Datenkarte, eingeführt werden kann. Die Schnittstellen zur Datenübertragung sind an der Innenseite des Schlitzes und an einer Aussenseite der Karte angebracht.

Nachteilig ist bei diesen bekannten Anordnungen, dass die Schnittstelle der Karte an oder nahe der Oberfläche liegt und allen möglichen Störeinflüssen ausgesetzt ist: Kontakte dem Berühren mit den Fingern, induktive und kapazitive Fühler der elektromagnetischen oder elektrostatischen Beeinflussung, optische Übertragungsmittel dem Fremdlicht.

Natürlich sind Abwehrmassnahmen möglich, wie Abschirmungen, Schutzschaltungen und Fehlerkorrekturen der empfangenen Signale. Diese Massnahmen sind entweder ungenügend oder kostspielig.

Die Erfindung hat zur Aufgabe, die erwähnten Nachteile zu beheben und eine wenig störanfällige, einfache und kostengünstige Telefonanordnung mit mobilen Datenträgern zu schaffen.

Die Lösung wird durch die kennzeichnenden Merkmale des Patentanspruchs 1 umschrieben. Der U-förmige Teil des mobilen Datenträgers schützt die im Innern desselben liegende Schnittstelle vor Störbeeinflussungen. Es ist entweder unmöglich, galvanische Kontakte zu berühren, induktive und Kapazitive Störquellen sind auf Distanz gehalten, oder Störlicht ist stark geschwächt.

Ausserdem eröffnet die Erfindung unerwartete Möglichkeiten zum Ausgestalten der Telefonanordnung. Solche vorteilhafte Ausführungsarten der Erfindung sind in den weiteren Patentansprüchen festgelegt.

Die Erfindung wird im folgenden an Hand von Beispielen erläutert. Es zeigen

Fig. 1 eine Klammer in Seitenansicht und zwei Frontansichten I und, als Schnitt II

Fig. 2 eine Telefonstation im Schnitt und in Teil-Rückansicht III

Fig. 3 perspektivische Gesamtansicht der gleichen Telefonstation mit einsatzbereiter Klammer, Anschluss-Schnur und einem ersten Zubehör

Fig. 4 nochmals den unteren Teil derselben Telefonstation mit Anschluss-Schnur und einem zweiten Zubehör.

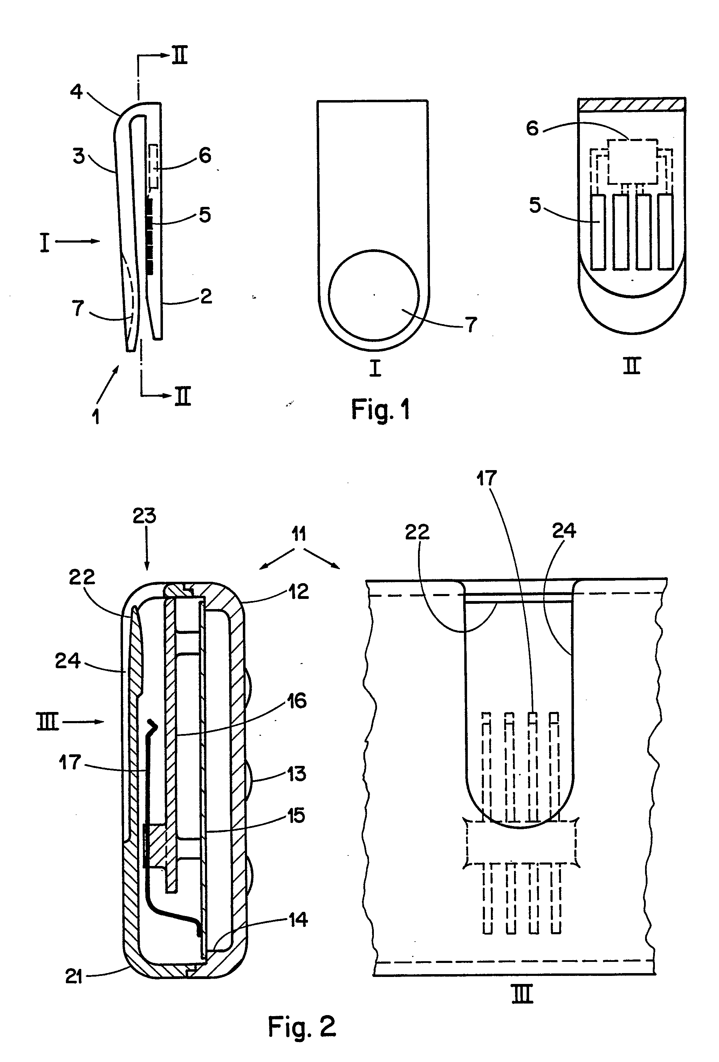

Der Datenträger nach der Fig. 1 besteht aus einer U-förmigen Klammer 1 mit zwei Schenkeln 2 und 3 von angenähert prismatischer Grundform mit rechteckigem Querschnitt, die durch einen federnden Scharnierbogen 4 mit dünnerem Querschnitt verbunden sind. Im entspannten Zustand stehen sich die leicht zugespitzten Schenkel 2,3 an der Endpartie näher gegenüber als in ihrem Ursprung. An der Innenfläche des kürzeren Schenkels 2 sind vier leitende Kontaktbahnen 5 angebracht, die an einer integrierten Schaltung 6 im Innern des Schenkels 2 angeschlossen sind. Die Aussenseite des längeren Schenkels 3 besitzt eine kalottenförmige Ausnehmung 7 als Griffelement zum Bewegen der Klammer 1. Die nichtleitenden Teile sind aus Kunststoff gefertigt.

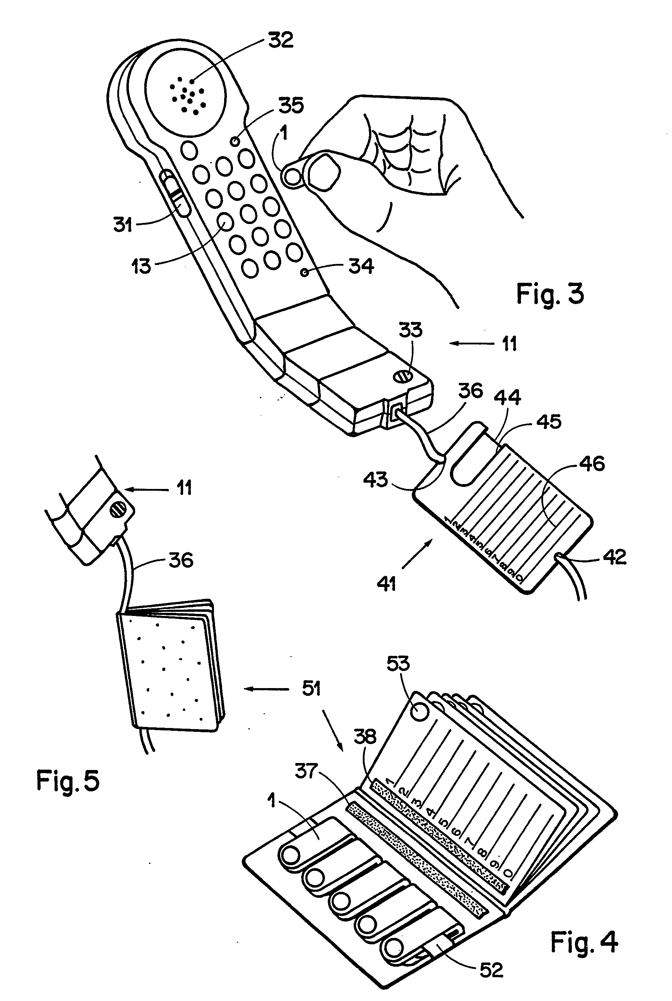

Die Telefonstation 11 nach der Fig. 2, als brettartiger Handapparat gemäss der Fig. 3 ausgeführt, besitzt ein zweischaliges Gehäuse aus Isolierkunststoff. Die Frontseite 12 mit der in Fig. 2 nur angedeuteten Tastatur 13 weist innen eine ringsum laufende Schulter 14 zum Aufsetzen einer gedruckten Schaltungsplatte 15 auf. Diese Platte 15 trägt ausser den üblichen elektronischen Bauelementen und dem Leitermuster eine Kontaktbaugruppe 16 mit vier darauf befestigten Kontaktfingern 17.

Die Rückseite 21 der Telefonstation 11 ist nun stückweise als Steg 22 zum Aufsetzen der Klammer 1 (Fig. 1) ausgebildet. Zusammen mit der Kontaktbaugruppe 16 (Fig. 2) ergibt sich dadurch ein Schacht 23 mit seiner Öffnung an der Schmalseite der Station 11, wobei eine längliche flache Ausnehmung 24 an ihrer Aussenseite dazu dient, die Klammer 1 zu führen und zu halten. Sobald die Klammer 1 eingesteckt ist, berühren sich die Kontaktfedern 17 und die Kontaktbahnen 5 (Fig. 1) und stellen dadurch als Schnittstellen eine übertragungsfähige Verbindung zwischen der Telefonstation 11 und der Klammer 1 als dem Datenträger her.

In der Fig. 3 ist nochmals die Handapparat-Telefonstation 11 mit EIN-/AUS-Schalter 31 auf der linken Schmalseite, mit Tastatur 13, mit Hör- und Sprechöffnungen 32 bzw. 33 und Signallampen 34, 35 auf der Frontseite und mit Anschluss-Schnur 36 mit Stecker auf der unteren Schmalseite dargestellt. Die oben beschriebenen Schachtöffnung 23 (Fig. 2) und Ausnehmung 24 mit Steg 22 befinden sich auf der Rückseite und sind in Fig. 3 nicht sichtbar. Dagegen ist die von einer Hand zum Einstecken bereit gehaltene Klammer 1 angedeutet.

Zum Aufbewahren der Klammer bei Nichtgebrauch dient eine kleine Karte 41, die normalerweise mittels zweier Schlitzösen 42, 43 an der Schnur 36 lösbar befestigt ist. Diese Karte besitzt ähnlich wie die Telefonstation einen Steg 44 und eine Führung 45 zum Anstecken der Klammer 1. Vorgedruckte und von 0...9 numerierte Zeilen 46 dienen zum Eintragen der wichtigsten Gesprächspartner, deren Nummern nach bekannten Kurzwahlverfahren in der integrierten Schaltung 6 Fig. 1 eingespeichert und ausgelesen werden können.

Übersteigt deren Zahl 10, so kann eine Art Notizbuch 51 gemäss Fig. 4 als Teilnehmerverzeichnis herangezogen werden. Dabei werden sozusagen die Stege 44 der einzelnen Karten von Fig. 3 ausgesondert und an einem besonderen Ansteckteil 52 Fig. 4 zusammengefasst. Zwecks Zuordnung der einzelnen Klammern 1 zu den Seiten mit den betreffenden Namen sind entweder die Klammern 1 verschiedenfarbig ausgeführt und die Seiten mit entsprechenden Farbtupfen 53 versehen, oder beide sind mit Buchstaben A, B..... bezeichnet, was aber hier nicht dargestellt ist, ebensowenig wie die elektronische Kennzeichnung jeder Klammer 1, welche von der Telefonstation 11 erkannt werden kann.

Um auch dieses Teilnehmerverzeichnis 51 stets zur Hand zu haben, kann es gemäss Fig. 5 ebenfalls an die Schnur 36 geklemmt werden. Als leicht lösbares Befestigungsmittel dient ein Paar Klettenklebebänder 37, 38, die auf gegenüberliegenden Seiten des Buches 51 angebracht sind.

## Ansprüche

1. Teilnehmer-Telefonanordnung mit mindestens einer Telefonstation (11) und einem mobilen Datenträger (1) zum zeitweiligen Anbringen an der Telefonstation (11), wobei beidseitig vorhandene Schnittstellen zum Übertragen von Daten in eine dazu geeignete Stellung zueinander bringbar sind, dadurch gekennzeichnet,
- dass der Datenträger (1) eine U-förmige Klammer (2,3,4) aufweist, an deren Innenseite die Datenträgerschnittstelle (5) angebracht ist, und
- dass die Telefonstation (11) einen Stegteil (22) aufweist, welcher zum Umfassen durch die Klammer bestimmt ist, und dass die Stationsschnittstelle (17) benachbart zum Stegteil angeordnet ist.

2. Anordnung nach Patentanspruch 1, dadurch gekennzeichnet,
- dass mindestens ein U-Schenkel (3) der Klammer (2,3,4) eine im allgemeinen prismatische Grundform aufweist, und
- dass die Telefonstation (11) eine entsprechend prismatische Führungsbahn (24) für den Schenkel besitzt.

3. Anordnung nach Patentanspruch 1 oder 2, dadurch gekennzeichnet, dass mindestens ein kartenförmiges, zum Anstecken einer Klammer (1) geeignetes und in numerierte Zeilen (46) eingeteiltes beschriftbares Teilnehmerverzeichnis (41,51) vorgesehen ist, welches Festhaltemittel (37,38,42,43) aufweist, die eine leicht lösbare Befestigung desselben an einer Schnur (36) der vorzugsweise als mobiler Handapparat ausgebildeten Telefonstation (11) gestatten.

4. Anordnung nach Patentanspruch 3, dadurch gekennzeichnet, dass die Karte (41) einen Stegteil (44) und eine Führung (45) zum Anstecken der Klammer (1) besitzt und dass die Festhaltemittel mindestens eine zum Kartenrand hin aufgeschlitzte Öse (42,43) enthalten.

5. Anordnung nach Patentanspruch 3, dadurch gekennzeichnet, dass mehrere Teilnehmerverzeichnis-Karten vorhanden und zu einem Buch (51) vereinigt sind, dass das Buch einen Ansteckteil (52) für mehrere Klammern aufweist, und dass an zwei gegenüberliegenden Buchseiten je ein Klettenklebeband (37,38) zum lösbaren Schliessen des Buches (51) über der Schnur (36) angebracht ist.

Fig. 1

Fig. 2

Fig. 3

Fig. 5

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 281 728 (ROBERT BOSCH GmbH)<br>* Spalte 2, Zeilen 5-50; Figuren *<br>--- | 1 | H 04 M 1/03<br>G 06 K 19/04 |
| A | PATENT ABSTRACTS OF JAPAN, Band 10, Heft 38 (P-428)[2095], 14. Februar 1986, Seite 44 P 428; & JP-A-60 183 693 (MATSUSHITA DENKO K.K.) 19-09-1985<br>* Zusammenfassung *<br>--- | 1 | |
| A | DE-A-3 245 203 (SIEMENS AG)<br>* Seite 4, Zeile 15 - Seite 5, Zeile 6; Figuren *<br>--- | 1,5 | |
| A | EP-A-0 233 649 (TOSHIBA)<br>* Spalte 3, Zeile 39 - Spalte 5, Zeile 50; Figuren 1-4 *<br>--- | 1 | |
| A | EP-A-0 275 091 (NEC CORP.)<br>* Spalte 3, Zeile 30 - Spalte 5, Zeile 6; Figuren 1,2 *<br>----- | 1 | |
| | | | **RECHERCHIERTE SACHGEBIETE (Int. Cl.5)**<br><br>G 06 K<br>H 04 M |

Der vorliegende Recherchenbericht wurde für alle Patentansprüche erstellt

| Recherchenort | Abschlußdatum der Recherche | Prüfer |
|---|---|---|
| DEN HAAG | 30-05-1990 | DELANGUE P.C.J.G. |